# EUROPEAN PATENT APPLICATION

(11) **EP 2 584 787 A2**
(43) Date of publication of application: **24.04.2013**
(21) Application number: 12006106.4
(22) Date of filing: 28.08.2012
(51) Int. Cl.: H04N 13/04

(54) **Stereoscopic display for secure display rendering**

(30) Priority: 20.10.2011 US 201161549495 P; 29.03.2012 US 201213434615
(71) Applicant: Broadcom Corporation, Irvine, CA 92617 (US)
(72) Inventor: Sorek, Noam, 30900 Zichron Yacoov (IL)
(74) Representative: Jehle, Volker Armin

(57) **Abstract**

A secured stereoscopic device, which includes a processor, a memory, and a stereoscopic rearranger configured to rearrange an unsecured image having a plurality of pixels into a first secured image component and a second secured image component, wherein the first secured image component and the second secured image component each display an indecipherable image. The secured stereoscopic device also includes a stereoscopic control module configured to transform the first secured image component and the second secured image component into a secured stereoscopic image, and a stereoscopic display configured to display the secured stereoscopic image, wherein the secured stereoscopic image displays a decipherable image.

## Description

### CROSS-REFERENCE TO RELATED APPLICATIONS

The present invention claims the benefit of U.S. Provisional Application No. 61/549,495, filed October 20, 2011 (Attorney Docket No. 2875.8890000), which is incorporated herein by reference in its entirety.

### BACKGROUND OF THE INVENTION

### Field of the Invention

The invention relates generally to the field of stereoscopic displays.

### Related Art

Stereoscopic displays are often associated with 3D viewing because they allow for the display of two or more images simultaneously. Typically one of the images is displayed to one eye and the other image is displayed to another eye. The human brain is then able to automatically combine the images using natural visual cues such as stereopsis and accommodation. In effect, the images become overlaid when interpreted by the human brain.

There are a variety of different stereoscopic displays. Some displays are dynamic, such as televisions or monitors and may display a variety of different stereoscopic images. Other displays are static, such as printed materials, and thus, may only display one stereoscopic image. Many stereoscopic displays require the use of specialized glasses in order to view the stereoscopic image. However, some stereoscopic displays such as autostereoscopic displays, do not require the use of specialized glasses.

### BRIEF SUMMARY OF THE INVENTION

According to an aspect, a secured stereoscopic device comprises:
a processor;
a memory;
a stereoscopic rearranger configured to rearrange an unsecured image having a plurality of pixels into a first secured image component and a second secured image component, wherein the first secured image component and the second secured image component each display an indecipherable image;
a stereoscopic control module configured to transform the first secured image component and the second secured image component into a secured stereoscopic image; and
a stereoscopic display configured to display the secured stereoscopic image, wherein the secured stereoscopic image displays a decipherable image.

Advantageously, the unsecured image is rendered in a graphics subsystem.

Advantageously, the stereoscopic display is an autostereoscopic display.

Advantageously, the secured stereoscopic device further comprises a printer configured to printing the secured stereoscopic image using autostereoscopic printing.

Advantageously, the stereoscopic rearranger is further configured to randomly split each of the plurality of pixels of the unsecured image between the first secured image component and the second secured image component.

Advantageously, the stereoscopic rearranger is further configured to:
recognize one or more portions of the unsecured image in the plurality of pixels, wherein each of the one or more portions have an associated predetermined rearrangement; and
apply the associated predetermined rearrangement to each of the one or more portions.

Advantageously, the one or more portions of the unsecured image contain one or more characters.

Advantageously, the one or more portions of the unsecured image contain one or more images.

Advantageously, the stereoscopic rearranger is further configured to randomly split each of the plurality of pixels of a portion of the unsecured image between the first secured image component and the second secured image component.

Advantageously, the stereoscopic rearranger is configured to rearrange a portion of the unsecured image into a first secured image component and a second secured image component, wherein the first secured image component and the second secured image component each display an indecipherable image.

According to an aspect, a method is provided for securing information on a steroscopic display comprising:
receiving an unsecured image having a plurality of pixels from an input device;
rearranging the unsecured image into a first secured image component and a second secured image component, wherein the first secured image component and the second secured image component each display an indecipherable image;
transforming the first secured image component and the second secured image component into a secured stereoscopic image; and
displaying the secured stereoscopic image on a stereoscopic output device, wherein the secured stereoscopic image displays a decipherable image.

Advantageously, the input device comprises a graphics subsystem configured to render the unsecured image.

Advantageously, the stereoscopic output device is an autostereoscopic display.

Advantageously, rearranging the unsecured image into a first secured image component and a second secured image component comprises:
splitting, randomly, each of the plurality of pixels of the unsecured image between the first secured image component and the second secured image component.

Advantageously, rearranging the unsecured image into a first secured image component and a second secured image component comprises:
recognizing one or more portions of the unsecured image in the plurality of pixels, wherein each of the one or more portions have an associated predetermined rearrangement; and
applying the associated predetermined rearrangement to each of the one or more portions.

Advantageously, the one or more portions of the unsecured image contain one or more characters.

Advantageously, the one or more portions of the unsecured image contain one or more images.

Advantageously, rearranging the unsecured image into a first secured image component and a second secured image component comprises:
splitting, randomly, each of the plurality of pixels of a portion of the unsecured image between the first secured image component and the second secured image component.

Advantageously, the stereoscopic rearranger is configured to rearrange a portion of the unsecured image into a first secured image component and a second secured image component, wherein the first secured image component and the second secured image component each display an indecipherable image.

According to an aspect, a secured printed material comprises:
a substrate material;
a secured stereoscopic image, bonded to the substrate material, having a first secured image component and a second secured image component, wherein the first secured image component displays an indecipherable image and the second secured image component displays an indecipherable image; and
a lenticular material, bonded to the secured stereoscopic image, wherein the lenticular material has a first viewing angle displaying the first secured image component and a second viewing angle displaying a second secured image component, and wherein when the first viewing angle and the second viewing angle are viewed stereoscopically a decipherable image is displayed.

### BRIEF DESCRIPTION OF THE DRAWINGS/FIGURES

Embodiments of the invention are described with reference to the accompanying drawings. In the drawings, like reference numbers indicate identical or functionally similar elements. Additionally, the left most digit(s) of a reference number identifies the drawing in which the reference number first appears.

FIG. 1 is a diagram of a secured stereoscopic display environment, according to an exemplary embodiment.

FIG. 2 is a block diagram of an exemplary secured stereoscopic device, according to an exemplary embodiment.

FIG. 3 is a perspective diagram of a secured printed material, according to an exemplary embodiment.

FIG. 4 is a flow diagram of a method for securing an image, according to an exemplary embodiment.

The invention will now be described with reference to the accompanying drawings. In the drawings, like reference numbers generally indicate identical, functionally similar, and/or structurally similar elements. The drawing in which an element first appears is indicated by the leftmost digit(s) in the reference number

### DETAILED DESCRIPTION OF THE INVENTION

The following Detailed Description refers to accompanying drawings to illustrate exemplary embodiments consistent with the invention. References in the Detailed Description to "one exemplary embodiment," "an exemplary embodiment," "an example exemplary embodiment," etc., indicate that the exemplary embodiment described may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the spirit and scope of the invention. Therefore, the Detailed Description is not meant to limit the invention. Rather, the scope of the invention is defined only in accordance with the following claims and their equivalents.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

The following Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the spirit and scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

### AN EXEMPLARY SECURED STEREOSCOPIC DISPLAY ENVIRONMENT

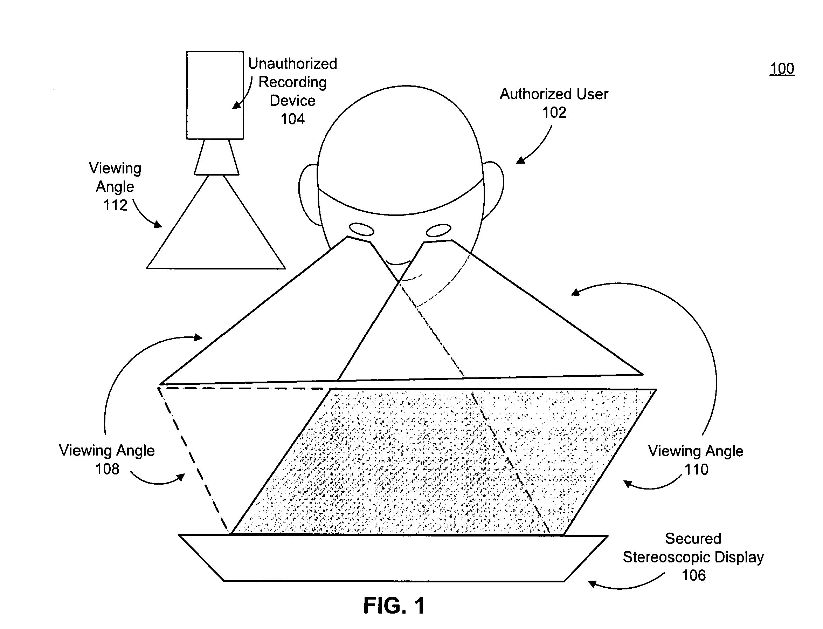

FIG. 1 is a diagram of a secured stereoscopic display environment 100, according to an exemplary embodiment. Secured stereoscopic display environment 100 includes an authorized user 102, an unauthorized recording device 104, and a secured stereoscopic display 106.

Secured stereoscopic display 106 may be any type of stereoscopic display capable of displaying two or more images at separate viewing angles. In particular, secured stereoscopic display 106 may be an autostereoscopic display, and thus may be viewed without the use of glasses. In an exemplary embodiment, stereoscopic display 106 may be a computer monitor or television. However, stereoscopic display 106 may also be printed material, such as a lenticular material, according to an exemplary embodiment. A stereoscopic image includes two or more image components displayed at a variety of viewing angles. For example, two image components may be displayed individually to respective eyes of a viewer. Due to the natural visual processing of the human brain, the image components, when viewed simultaneously may naturally be combined or overlaid. The image components may represent a scene. The scene is a snapshot of the graphical or textual information that is conveyed by the stereoscopic image at a moment in time. For example, the scene may depict a single frame of a video, a picture, graphical user interface, a textual document, or any other type of image. Accordingly, if each of the image components display the scene from the angle that each eye would have seen the scene originally, the image components, when viewed simultaneously, and directed to each respective eye, may simulate 3D. However, if each of the image components display the scene from the same angle, and directed to each eye, they may be naturally combined by the brain to produce a 2D image. Accordingly, a stereoscopic image may be either 2D or 3D.

Authorized user 102 views secured stereoscopic display 106 at viewing angles 108 and 110. Viewing angle 108 (as outlined by the dashed lines in FIG. 1) may be directed towards the right eye of authorized user 102. Viewing angle 110 (outlined by solid lines in FIG. 1) relates to the left eye of authorized user 102. Each of the viewing angles 108 and 110 may display an image component of the stereoscopic image.

To help explain an embodiment of the invention, consider unauthorized recording device 104, which is not permitted to view the scene displayed on secured stereoscopic display 106. Unauthorized recording device 104 may be any type of recording device capable of recording an image from a single perspective or angle. Unauthorized recording device 104 may view secured stereoscopic display 106 from viewing angle 112. However, secured stereoscopic display 106 may display a secured stereoscopic image such that unauthorized recording device 104 may not be able to effectively record the scene which is displayed. In particular, each of the image components of the secured stereoscopic image may depict an indecipherable image. For example, if either of the image components were viewed individually they would not convey decipherable information. In some cases, they may even convey incorrect information. However, when the image components are viewed together stereoscopically (e.g. overlaid), they depict a decipherable scene. A person of skill in the art would recognize that similarly to unauthorized recording device 104, an unauthorized user may also be attempting to view secured stereoscopic display 106. However, like unauthorized recording device 104, the unauthorized user may also be unable to decipher the secured stereoscopic image.

Unauthorized recording device 104 may be recording the secured stereoscopic display 106 from only one viewing angle, such as viewing angle 112. Accordingly, unauthorized recording device 104 may at most see only one image component, and thus not record a decipherable image. For example, from viewing angle 112, unauthorized recording device 104, may at most only view the image component projected from viewing angle 108. However, the images projected from both viewing angles 108 and 110 may need to be seen simultaneously in order to decipher the secured stereoscopic image. Accordingly, since neither image component individually depicts a decipherable scene, unauthorized recording device 104 may not be able to decipher the scene.

### AN EXEMPLARY SECURED STEROSCOPIC DEVICE

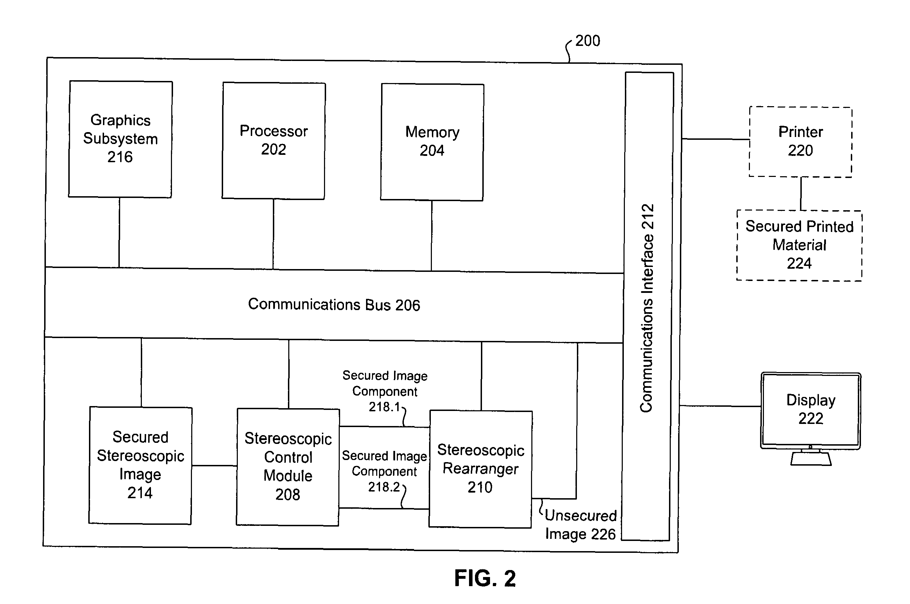

FIG. 2 is a block diagram of an exemplary secured stereoscopic device 200, according to an exemplary embodiment. Secured stereoscopic device 200 may be implemented as a standalone device, or components of secured stereoscopic device 200 may be implemented in other devices. Secured stereoscopic device 200 may be a dedicated device or a general computing device, including but not limited to, a personal computer, laptop, server, gaming device, or a mobile device.

Secured stereoscopic device 200 includes a processor 202 and a memory 204. Processor 202 may be configured to execute instructions stored on memory 204. Processor 202 may be a general purpose processor or a special purpose processor. Memory 204 may be any type of persistent or non-persistent computer readable storage medium including but not limited to, RAM, ROM, EPROM, EEPROM, flash memory, a magnetic storage medium, or an optical storage medium. Processor 202 may communicate with memory 204 over communications bus 206. Communications bus 206 may allow for both parallel and serial connections between devices and modules connected to communications bus 206. Processor 202 may also communicate with stereoscopic control module 208, stereoscopic rearranger 210, and graphics subsystem 216. Stereoscopic control module 208, stereoscopic rearranger 210, and graphics subsystem 216 may each be implemented in-part or in-whole in hardware, software or a combination of both. If implemented in software, each of the stereoscopic control module 208, stereoscopic rearranger 210, and graphics subsystem 216 may comprise instructions stored on memory 204. In an exemplary embodiment, graphics subsystem 216 may be stored on a separate memory (not shown). Accordingly, each of the stereoscopic control module 208, stereoscopic rearranger 210, and graphics subsystem 216 may perform their own native processing or communicate instructions to processor 202.

Secured stereoscopic device 200 includes an interface 212 for connecting to external devices. Interface 212 may be connected to a stereoscopic display 222. Stereoscopic display 222 may be any type of display device capable of displaying a stereoscopic image. Stereoscopic display 222 may be integrated or connected externally with secured stereoscopic device 200. For example, secured stereoscopic device 200 may be a laptop, and display 222 may be an integrated display. Stereoscopic display 222 may also be an externally connected computer monitor or television. Stereoscopic display 222 may be, including but not limited to, a liquid crystal display (LCD), cathode ray tube (CRT), plasma display, or organic light emitting diode display. In particular, stereoscopic display 222 may be an autostereoscopic display. An autostereoscopic display may be viewed without the assistance of specialized glasses. For example, stereoscopic display 222 may use one or more lenticular lenses, parallax barriers, movement parallaxes, eye/face tracking, or any other technique for displaying autostereoscopic images. In an exemplary embodiment, stereoscopic display 222 may also be dual-mode. Accordingly, stereoscopic display 222 may be capable of displaying a stereoscopic image in one mode, but a non-stereoscopic image in another. This may be controlled automatically, based upon the type of images sent to stereoscopic display 222 or may be controlled manually by a user by pressing a hardware button or through the use of a software control.

Secured stereoscopic device 200 includes graphics subsystem 216. Graphics subsystem 216 may be configured to render images in real-time that are intended to be displayed on stereoscopic display 222. Accordingly, unsecured image 226 may be the particular image that is displayed on display 222 at a particular moment in time. For example, unsecured image 226 may be a frame of a video, or a snapshot of a graphical user interface (GUI) or a textual document. In an exemplary embodiment, unsecured image 226 may be non-stereoscopic. However, graphics subsystem 216 may also be configured to directly render unsecured stereoscopic images too. Rendering is the act of creating and organizing an image or frame prior to outputting the image or frame to a display. For example, based upon received software instructions and stored data, graphics subsystem 216 may render unsecured image 226. Graphics subsystem 216 may include a specialized processor (not shown), such as a graphics processing unit (GPU). Graphics subsystem 216 may also be configured for shared graphics. Accordingly, graphics subsystem 216 may use memory 204 for part or all of its operations. However, graphics subsystem 216 may also be configured to use dedicated memory (not shown) for part or all of its operations.

In an exemplary embodiment, secured stereoscopic device 200 includes stereoscopic rearranger 210. Stereoscopic rearranger 210 may be configured to create secured stereoscopic image components 218.1 and 218.2 from unsecured image 226. Stereoscopic rearranger 210 may split unsecured image 226 into secured image components 218.1 and 218.2. Secured image components 218.1 and 218.2 may each display indecipherable content alone. However, when secured image components 218.1 and 218.2 are overlaid they may display decipherable content. This process may occur naturally when an image is viewed stereoscopically by a human.

The particular rearrangements that stereoscopic rearranger 210 may use to split unsecured image 226 into secured image components 218.1 and 218.2 may depend on the particular content displayed in unsecured image 226. In particular, stereoscopic rearranger 210 may rearrange a portion or all of unsecured image 226. For example, unsecured image 226 may contain textual content. In such a case, stereoscopic rearranger 210 may be configured to recognize individual characters and/or words using optical character recognition (OCR). Accordingly, stereoscopic rearranger 210 may be configured to automatically split characters within detected words randomly between secured image components 218.1 and 218.2. For example, if the word "dog" were desired to be displayed securely, the letters "d" and "g" may be randomly determined to be displayed in secured image component 218.1 and the letter "o" may be randomly determined to be displayed in secured image component 218.2. The letters may also be split non-randomly. For example odd letters may be displayed in secured image component 218.1 and even letters may be displayed in secured image component 218.2. Stereoscopic rearranger 210 may also be configured to split characters within words using a predetermined dictionary. In particular, the predetermined dictionary may provide rearrangements that are more likely to cause confusion when split. For example, a word that conveys a negative meaning may be changed to convey a positive meaning, such as splitting the word "incorrect" into "in" and correct.

Once the particular splitting rearrangement has been determined for the words, the pixels representing the individual letters may be located and split between secured image components 218.1 and 218.2. For example, if the letters "in" are to be placed in secured image component 218.1, then the pixels representing the letters "in" may be placed in secured image component 218.1 in a corresponding position to their position in unsecured image 226. Likewise, the pixels representing the letters "correct" may be placed in secured image component 218.2 in a corresponding location to their position in unsecured image 226.

Stereoscopic rearranger 210 may also be configured to split between secured image components 218.1 and 218.2 individual characters using predetermined rearrangements for each type of recognized character. These rearrangements may cause the character to appear totally unrecognizable or may cause the character to appear as a different character. For example, stereoscopic rearranger 210 may split the pixels representing the letter "T" such that the "T" appears as a different letter, such as "I" in a particular secured image component. In particular, these rearrangements may split the pixels of a character in such a manner, such that the indecipherability of each of the secured image components 218.1 and 218.2 is maximized.

Stereoscopic rearranger 210 may also be configured with predetermined rearrangements for images, such as logos. For example, stereoscopic rearranger 210 may detect a company logo within unsecured image 226. In such a case, stereoscopic rearranger 210 may be configured to split the pixels of the logo, using a predetermined rearrangement, between secured image components 218.1 and 218.2 such that the logo is indecipherable in each of the image components. For images or text that are not automatically detected, stereoscopic rearranger 210 may randomly split parts of the original image on a pixel by pixel basis to each of the secured image components 218.1 and 218.2. Stereoscopic rearranger 210 may also be configured to randomly split all of unsecured image 226 on a pixel by pixel basis between secured image components 218.1 and 218.2.

In an exemplary embodiment, random mutations may also be introduced in the cases where stereoscopic rearranger uses predetermined patterns. For example, as discussed above, stereoscopic rearranger 210 may have predetermined rearrangements for recognized characters, words, or images. In such cases, the patterns may be randomly mutated in order to further thwart detection when an unauthorized user or device, such as unauthorized device 112 of FIG. 1 may have the ability to monitor secured stereoscopic device 200 for a long period of time or over multiple sessions. For example, stereoscopic rearranger 210 may be configured to randomly decide to place a pixel that was predetermined to be in secured image component 218.1 to be in secured image component 218.2 in order to thwart detection. Stereoscopic rearranger 210 may also be configured to adjust any rearrangement, whether the rearrangement is predetermined or random, at either fixed or random intervals. For example, secured image components 218.1 and 218.2 may be rearranged every 15 minutes with a different pattern. The particular period of time may be any interval, however, a longer interval may prevent an unauthorized user or device from decoding secured stereoscopic 214 by stringing together all of the rearrangements made at each interval.

Stereoscopic rearranger 210 may also be configured to secure only portions of unsecured image 226. For example, if unsecured image 226 displays a login window only the username and password portions of the login window may be desired to be secured. Stereoscopic rearranger 210 may then be configured to secure only the desired portions of unsecured image 226. In particular, the portions that remain unsecured may be displayed in both secured image components 218.1 and 218.2, while the secured portions may be split between secured image components 218.1 and 218.2. The particular portion that may be secured may be selected automatically or selected by a user. For example, secured stereoscopic device 200 may be configured to automatically determine when sensitive materials are being displayed and their respective locations within unsecured image 226. This may occur, based upon the type of application that is running, the type of file that is open, the location of secured stereoscopic device 200, or a variety of other factors. A user may also manually select portions of unsecured image 226 that may need to be secured. This may occur by drawing a box, or other shape around the particular area that a user desires to secure, or by enabling the entirety of stereoscopic display 222 to be secured.

Providing a common anchor between secured image components 218.1 and 218.2 may also be desirable in some circumstances. In particular, a common anchor, such as a border, may ease the natural combination of secured image components 218.1 and 218.2 by a human. Accordingly, stereoscopic rearranger 210 may also be configured to leave such a common anchor portion unsecured.

Stereoscopic rearranger 210 may also be configured to secure images using colorized pixels. For example, a pixel may store color information related to the color in which the pixel is to be displayed. In an exemplary embodiment, the pixel may store this information using an RGB color model. For example, the pixels may store information related to each of their red, green, or blue color components. However, they may also store color information using other models, including, but not limited to, CMYK or YUV. Stereoscopic rearranger 210 may then be configured to split pixels based upon their color components. For example, secured stereoscopic image 214 may be configured to display decipherable information in a desired output color, such as purple. In such a case, stereoscopic rearranger 210 may randomly output color components of an output color to secured image components 218.1 and 218.2. For example, if the desired output color is purple, stereoscopic rearranger may output red pixels to secured image component 218.1 and blue pixels to secured image component 218.2. Each of the secured image components 218.1 and 218.2, when viewed individually, may appear as random red or blue pixels. However, when secured image components 218.1 and 218.2 are viewed stereoscopically, decipherable information may be conveyed in purple. In particular, the decipherable information may be located where the red pixels overlap with blue pixels within secured image components 218.1 and 218.2. Accordingly, secured image components 218.1 and 218.2, when viewed stereoscopically, may appear to display randomly located red and blue pixels with purple pixels displaying a decipherable message.

Secured stereoscopic device 200 also includes a stereoscopic control module 208. Stereoscopic control module 208 may be configured to create a secured stereoscopic image 214 from secured image components 218.1 and 218.2. Secured stereoscopic image 214 is an image that may be displayed by stereoscopic output device, such as stereoscopic display 222. However, secured stereoscopic image 214 may also be displayed on a secured printed material 224. Secured stereoscopic image 214 may include secured image components 218.1 and 218.2. In particular, secured image components 218.1 and 218.2 may be interlaced on secured stereoscopic image 214. Each interlaced set of images may then be directed to a particular eye when displayed. For example secured stereoscopic image 214 may include two or more stripes, with each stripe representing a portion of either secured image component 218.1 and 218.2. For example, the odd stripes may contain portions of secured image component 218.1 and the even stripes may contain portions of secured image component 218.2. The odd stripes may be directed to the left eye of a viewer and the even stripes may be directed to the right eye. Accordingly, the left eye may see secured image component 218.1 and the right eye may see secured image component 218.2. Using the natural processing of the brain, the secured image components may be overlaid, and thus deciphered by a person. However, other types of processing may be required depending on the particular type of display device. For example, other types of display devices may require processing, such as any combination of linear polarization, circular polarization, color filtering, or alternating image components.

Unsecured image 226 may also be stored as a file on secured stereoscopic device 200. For example, unsecured image 226 may have been created in imaging editing software instead of graphics subsystem 216. In an exemplary embodiment, secured stereoscopic device 200 may also be optionally connected to a printer 220. In such a case, secured stereoscopic device 200 may not include stereoscopic display 222 or may include a non-stereoscopic display. Printer 220 may be connected to secured stereoscopic device 200 via interface 212. In an exemplary embodiment, printer 220 may be connected externally to secured stereoscopic device 200. However, printer 220 and secured stereoscopic device 200 may also be integrated into a single device. Printer 220 may be capable of printing secured printed material 224. Secured printed material 224 may be any type of printed material capable of displaying secured stereoscopic image 214. For example, the secured printed material may be produced using autostereoscopic printing. Autostereoscopic printing includes techniques for printing two or more images such that they are displayed at a variety of viewing angles. When viewed by a human, the images may be naturally combined. For example, one technique of autostereoscopic printing is lenticular printing. Lenticular printing is a process for printing two or more images combined with a lenticular material.

### AN EXEMPLARY SECURED PRINTED MATERIAL

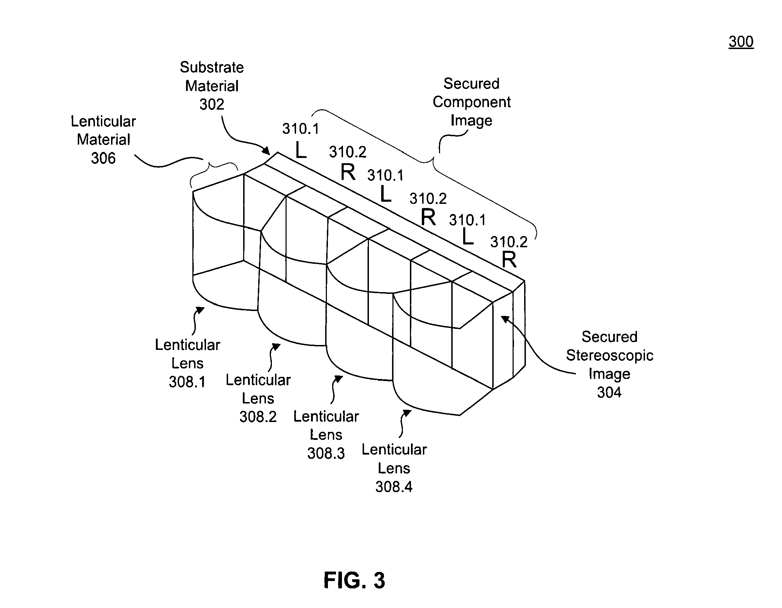

FIG. 3 is a perspective diagram of a secured printed material 300, according to an exemplary embodiment. Secured printed material 300 includes a substrate material 302, a secured stereoscopic image 304, and a lenticular material 306.

Secured printed material 300 may be configured to display a stereoscopic image, for example, secured stereoscopic image 304. Substrate material 302 may be any type of backing material. For example, substrate material 302 may be a polymer or a paper based material. In an exemplary embodiment, substrate material 302 may be a cardboard. Lenticular material 306 may include two or more lenticular lenses. A lenticular lens is a type of lens that magnifies different images when viewed from different angles. Accordingly, the lenticular lenses 308.1 and 308.2 may allow for the component images of secured stereoscopic image 304 to be directed to each eye of a viewer. Lenticular material 306 may be a polymer-based material. Lenticular material 306 also includes lenticular lenses 308.1-308.4. Lenticular material 306 may be bonded or fused to substrate material 302, for example by using a transparent adhesive.

In an exemplary embodiment, secured stereoscopic image 304 is printed directly on lenticular material 306. However, secured stereoscopic image 304 may also be printed directly on substrate material 302, according to an exemplary embodiment. Secured stereoscopic image 304 may also be printed on a separate material, such as a paper or polymer based material and bonded in between substrate material 302 and lenticular material 306.

Secured stereoscopic image 304 may be created using secured stereoscopic device 200. For example, secured stereoscopic image 304 may be printed using secured printed material 224. Secured stereoscopic image 304 includes secured image components 310.1 and 310.2. Secured image components 310.2 and 310.2 may individually display an indecipherable image, however when secured printed material is viewed stereoscopically, a decipherable image may be displayed. Each of the secured image components 310.1 and 310.2 may be interlaced within secured stereoscopic image 304. For example, each of the secured image components 310.1 and 310.2 may be split into stripes and the stripes may be interlaced within secured stereoscopic image 304. The odd stripes may be portions of secured image component 310.1. The even stripes may be portions of secured image component 310.2. Each stripe aligns with a lenticular lens in lenticular lenses 308.1-308.4. The lenticular lenses may then direct the odd stripes to the left eye of a viewer (as represented by the "L" in secured stereoscopic image 304) and the even stripes may be directed to the right eye of viewer (as represented by the "R" in secured stereoscopic image 304). Accordingly, when lenticular lenses 308.1 are coupled with secured stereoscopic image 304 and aligned respectively to each interlaced stripe, each of secured image components 310.1 and 310.2 are directed to each eye of a viewer, and secured printed material 300 may be viewed stereoscopically. Similarly to the secured stereoscopic display 106 of FIG. 1, when each of secured image components 310.1 and 310.2 are directed to each eye of a viewer simultaneously, they are naturally overlaid, thus, permitting the secured printed material 300 to display a decipherable image. Accordingly, if secured printed material 300 is recorded or viewed from a single angle or perspective, secured printed material 300 may only display at most one of secured image component 310.1 or secured image component 310.2.

### AN EXEMPLARY METHOD FOR SECURING AN IMAGE

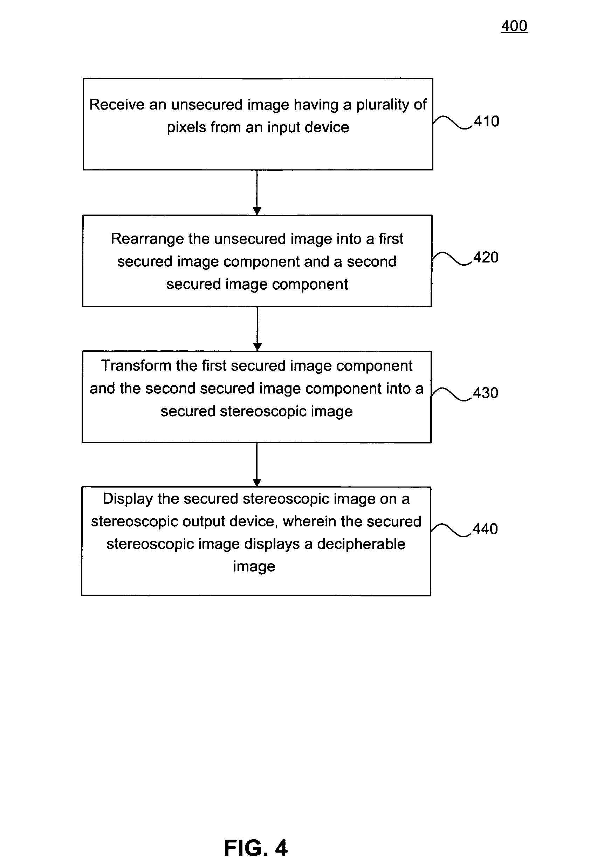

FIG. 4 is a flow diagram of a method 400 for securing an image, according to an exemplary embodiment.

At block 410 of method 400, an unsecured image is received from an input device. The unsecured image may be received from an input device such as a graphics subsystem, for example graphics subsystem 216. Accordingly the unsecured image may have been rendered by the graphics subsystem. The image data may also be received from an input device such as memory, for example, memory 204. In such a case, the unsecured image may have been created by a software application. The unsecured image may also be located in a file.

At block 420, the unsecured image is rearranged into a first secured image component and a second secured image component. In particular, the unsecured image is rearranged such that the first secured image component and the second secured image component each convey indecipherable images individually. The unsecured image may be rearranged using a stereoscopic rearranger, such as stereoscopic rearranger 210. The particular technique that may be used to rearrange the unsecured image may depend on the particular type of unsecured image. For example in some cases only portions of the unsecured image may be rearranger. Optical character recognition may be performed on the unsecured image in order to detect one or more characters. Each of the one or more characters may then be rearranged using preconfigured rearrangements based upon the detected words. In particular, individual characters in words may be split randomly between the first and second secured image components. For example, if the word "dog" were desired to be displayed securely, the letters "d" and "g" may be displayed in a first secured image component and the letter "o" may be displayed in the second secured image component. The characters may also be split in other ways, such as all of the even letters are displayed in the first secured image component and all of the odd letters are displayed in the second image component. A predetermined dictionary may also be used in order to determine rearrangements for words. In particular, the predetermined dictionary may provide rearrangements that are more likely to cause confusion when split. For example, a word that conveys a negative meaning may be changed to convey a positive meaning, such as splitting the word "incorrect" into "in" and correct.

The individual recognized characters themselves may also be split such that they appear unrecognizable or as a different character. For example, the letter "T" may be split such that it appears as the letter "I". Similar to characters, images may also be recognized and split between the secured image components using configured rearrangements. For example, a company logo may be recognized and split using a preconfigured rearrangement. If a character or image is not recognized the character or image may be randomly split on a pixel by pixel basis between the secured image components. The entirety of the unsecured image may also be randomly split between the secured image components. Random mutations may also be introduced in order to prevent decoding based upon viewing the secured image components over a long period of time. The secured image components may also be rearranged at random or predetermined intervals.

In an exemplary embodiment, only portions of the unsecured image may be secured. For example, it may be desirable for only a portion of the unsecured image to be secured if unsecured image displays a login window. In such a case, only the username and password portions of the login window may need to be secured. Accordingly, the stereoscopic rearranger may be configured to only secure the desired portions of unsecured image. In particular, the portions that remain unsecured may be displayed in both of the secured image components, while the secured portions may be split between the secured image components. The portion to be secured may be automatically selected or manually selected. For example, a user may manually select a portion of the unsecured image, by drawing a box or other shape around the section desired to be secured.

Providing a common anchor between the secured image components may also be desirable in some circumstances. In particular, a common anchor, such as a border, may ease the natural combination of the secured image components by a human. Accordingly, stereoscopic rearranger may also be configured to leave such a common anchor portion unsecured.

The unsecured image may also be rearranged based upon color components. For example, the secured stereoscopic image may display decipherable information in a first color. The first and second secured image components may contain pixels that are color components of the first color. A portion of the pixels of the first and second image components may overlap to form the decipherable content. For example, red pixels may be outputted to a first secured image component and blue pixels may be outputted to a second secured image components. However, when the first and second secured image components are viewed stereoscopically, decipherable information may be conveyed in purple. In particular, the decipherable information may be located where the red pixels overlap with blue pixels within the first and second secured image components. Accordingly, secured image components 218.1 and 218.2, when viewed stereoscopically, may appear to display randomly located red and blue pixels with purple pixels displaying a decipherable message.

At block 430, the first secured image component and the second secured image component are transformed into a secured stereoscopic image. The particular technique that is used to transform the first secured image component and the second secured image component into a secured stereoscopic image may depend on the particular type of stereoscopic output device. For example, if the stereoscopic output device is an autostereoscopic device, the first image component and the second secured image component may be interlaced together in order to create the secured stereoscopic image. Other types of displays may require different types of processing, such as any combination of linear polarization, circular polarization, color filtering, or alternating image components.

At block 440, the secured stereoscopic image is displayed on a stereoscopic output device. For example, the secured stereoscopic image may be displayed on stereoscopic display 222 or secured printed material 300. The secured stereoscopic image may be displayed at two separate viewing angles that are aligned to a viewer's eyes. At each of the separate angles a secured image component may be displayed. Accordingly, each of the secured image components may be projected to a viewer's eyes, respectively. As discussed above, each secured image component is individually indecipherable, however when combined using the natural processing power of the human brain they combined or overlaid image may be decipherable.

In an exemplary embodiment, the methods and systems disclosed herein may also be adapted to therapeutic purposes. In particular, the stereoscopic image may be displayed in such a manner that it has a therapeutic effect on the viewer. For example, the image may be displayed on stereoscopic display 222 or secured printed material 300. A first image component of the stereoscopic image may contain a therapeutic image. A therapeutic image, when viewed, may generate a desired response by the viewer of the therapeutic image. For example, the image may have a soothing effect when viewed. However, when all of the image components are viewed stereoscopically a stereoscopic image is displayed. The stereoscopic image may be a combination of the first image component and a plurality of other image components. In an exemplary embodiment, the stereoscopic image may be non-therapeutic. However, the stereoscopic image may also be a different therapeutic image then the first image component. For example, the stereoscopic image may be indecipherable or may contain an unrelated scene to the first image component. Accordingly, while the viewer may be only aware of the stereoscopic image, the first image component may be naturally processed by the viewer.

### CONCLUSION

It is to be appreciated that the Detailed Description section, and not the Abstract section, is intended to be used to interpret the claims. The Abstract section may set forth one or more, but not all exemplary embodiments, of the invention, and thus, are not intended to limit the invention and the appended claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the spirit and scope of the invention. Thus the invention should not be limited by any of the above-described exemplary embodiments, but should be defined only in accordance with the following claims and their equivalents.

## Claims

1. A secured stereoscopic device comprising:
a processor;
a memory;
a stereoscopic rearranger configured to rearrange an unsecured image having a plurality of pixels into a first secured image component and a second secured image component, wherein the first secured image component and the second secured image component each display an indecipherable image;
a stereoscopic control module configured to transform the first secured image component and the second secured image component into a secured stereoscopic image; and
a stereoscopic display configured to display the secured stereoscopic image, wherein the secured stereoscopic image displays a decipherable image.

2. The secured stereoscopic device of claim 1, wherein the unsecured image is rendered in a graphics subsystem.

3. The secured stereoscopic device of claim 1, wherein the stereoscopic display is an autostereoscopic display.

4. The secured stereoscopic device of claim 1, further comprising a printer configured to printing the secured stereoscopic image using autostereoscopic printing.

5. The secured stereoscopic device of claim 1, wherein the stereoscopic rearranger is further configured to randomly split each of the plurality of pixels of the unsecured image between the first secured image component and the second secured image component.

6. The secured stereoscopic device of claim 1, wherein the stereoscopic rearranger is further configured to:
recognize one or more portions of the unsecured image in the plurality of pixels, wherein each of the one or more portions have an associated predetermined rearrangement; and
apply the associated predetermined rearrangement to each of the one or more portions.

7. The secured stereoscopic device of claim 6, wherein the one or more portions of the unsecured image contain one or more characters.

8. The secured stereoscopic device of claim 6, wherein the one or more portions of the unsecured image contain one or more images.

9. The secured stereoscopic device of claim 1, wherein the stereoscopic rearranger is further configured to randomly split each of the plurality of pixels of a portion of the unsecured image between the first secured image component and the second secured image component.

10. The system claim 1, wherein the stereoscopic rearranger is configured to rearrange a portion of the unsecured image into a first secured image component and a second secured image component, wherein the first secured image component and the second secured image component each display an indecipherable image.

11. A method for securing information on a steroscopic display comprising:
receiving an unsecured image having a plurality of pixels from an input device;
rearranging the unsecured image into a first secured image component and a second secured image component, wherein the first secured image component and the second secured image component each display an indecipherable image;
transforming the first secured image component and the second secured image component into a secured stereoscopic image; and
displaying the secured stereoscopic image on a stereoscopic output device, wherein the secured stereoscopic image displays a decipherable image.

12. The method claim 11, wherein the input device comprises a graphics subsystem configured to render the unsecured image.

13. The method of claim 11, wherein the stereoscopic output device is an autostereoscopic display.

14. The method of claim 11, wherein rearranging the unsecured image into a first secured image component and a second secured image component comprises:
splitting, randomly, each of the plurality of pixels of the unsecured image between the first secured image component and the second secured image component.

15. A secured printed material comprising:
a substrate material;
a secured stereoscopic image, bonded to the substrate material, having a first secured image component and a second secured image component, wherein the first secured image component displays an indecipherable image and the second secured image component displays an indecipherable image; and
a lenticular material, bonded to the secured stereoscopic image, wherein the lenticular material has a first viewing angle displaying the first secured image component and a second viewing angle displaying a second secured image component, and wherein when the first viewing angle and the second viewing angle are viewed stereoscopically a decipherable image is displayed.
